# EUROPEAN PATENT SPECIFICATION

(11) **EP 3 984 880 B1**
(45) Date of publication and mention of the grant of the patent: **30.07.2025**
(21) Application number: 21203560.4
(22) Date of filing: 19.10.2021
(51) Int. Cl.: B64C 11/00

(54) **SYSTEM AND METHOD FOR PROPELLER BALANCING**
SYSTEM UND VERFAHREN FÜR PROPELLERAUSGLEICH
SYSTÈME ET PROCÉDÉ D'ÉQUILIBRAGE D'HÉLICE

(30) Priority: 19.10.2020 US 202017073774
(43) Date of publication of application: 20.04.2022
(73) Proprietor: PRATT & WHITNEY CANADA CORP., Longueuil, Québec J4G 1A1 (CA)
(72) Inventor: TSANG, Jennifer Erin, Longueuil (01BE5), J4G 1A1 (CA); SIDDIQUI, Mohammed Abdurraheem, Longueuil (01BE5), J4G 1A1 (CA); WIGNY, Robert, Longueuil (01BE5), J4G 1A1 (CA)
(74) Representative: Dehns

(56) References cited:
- EP-A1- 3 222 516

## Description

### TECHNICAL FIELD

The application relates generally to propeller-powered aircraft and, more particularly, to propeller balancing on propeller-powered aircraft.

### BACKGROUND OF THE ART

Propeller powered aircraft, small and large, require propeller balancing at some point in time. Some require balancing more often than others.

Many systems require the aircraft to be on the ground to perform engine runs in order to collect the data needed for propeller balancing. This is not an effective solution as the ground data is not truly representative of inflight conditions. Other systems will collect data inflight and provide it to a ground station post-flight for analysis. However, such systems are programmed to gather data at specific points in time, which again does not consider specific operational conditions of the flight.

Therefore, there is room for improvement.

EP 3222516 A1 discloses propeller balancing using inflight data.

### SUMMARY

In one aspect, there is provided a method for propeller balancing of an aircraft as set forth in claim 1.

In another aspect, there is provided a system for propeller balancing of an aircraft as set forth in claim 10.

Embodiments of the disclosure are set forth in the dependent claims.

### DESCRIPTION OF THE DRAWINGS

Reference is now made to the accompanying figures in which:
FIG. 1 is a schematic cross-sectional view of a gas turbine engine, in accordance with one embodiment;
FIG. 2A is a schematic diagram of an aircraft system, including a propeller balancing unit, in accordance with one embodiment;
FIG. 2B is a block diagram the vibration data processing unit of FIG. 2A, in accordance with one embodiment;
FIG. 3A is a screenshot of a web portal interface presenting a trend line overview of propeller vibration, in accordance with one embodiment;
FIG. 3B is a screenshot of a web portal interface presenting a propeller vibration overview at a given point in time, in accordance with one embodiment;
FIG. 3C is a screenshot of a web portal interface presenting weights currently installed on a propeller balance rim, in accordance with one embodiment;
FIG. 3D is a screenshot of a web portal interface presenting a suggested propeller balancing solution, in accordance with one embodiment;
FIG. 3E is a screenshot of a web portal interface presenting an alteration to the suggested propeller balancing solution of FIG. 3D, in accordance with one embodiment;
FIG. 4 is a block diagram of a computing device, in accordance with an illustrative embodiment; and
FIG. 5 is a flowchart of a method for propeller balancing, in accordance with one embodiment.

### DETAILED DESCRIPTION

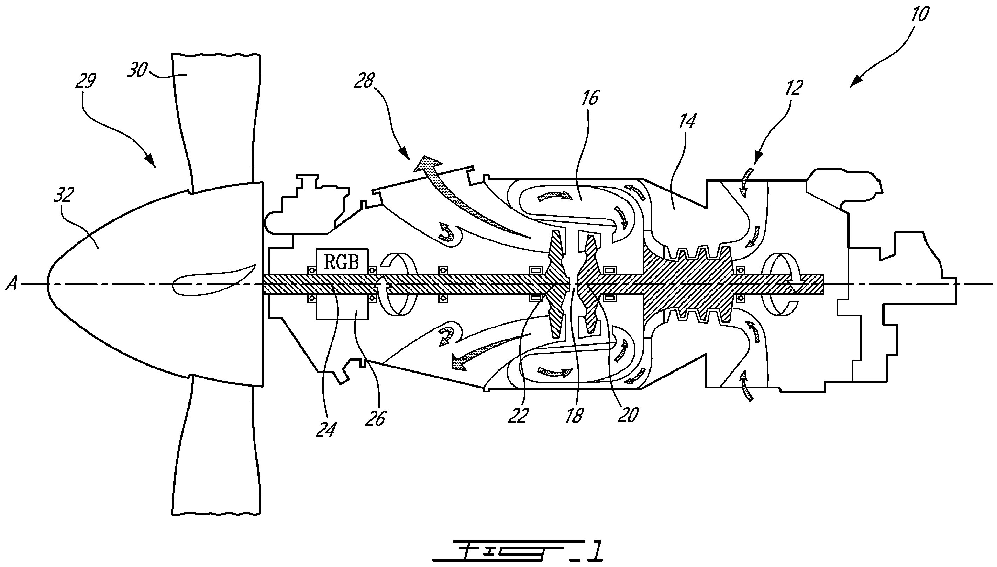

There is described herein systems and methods for propeller balancing on propeller-powered aircraft. The aircraft is equipped with an engine, such as a turboprop engine having a propeller. FIG. 1 illustrates an exemplary gas turbine engine 10 of a type preferably provided for use in subsonic flight, generally comprising in serial flow communication an inlet 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The turbine section 18 illustratively comprises a compressor turbine 20, which drives the compressor assembly and accessories, and at least one power or free turbine 22, which is independent from the compressor turbine 20 and drives the rotor shaft 24 through a reduction gearbox (RGB) 26. Hot gases may then be evacuated through exhaust stubs 28. Other configurations for a free turbine turboprop engine 10 may also apply.

A propeller 29 through which ambient air is propelled, is composed of a propeller hub 32 and blades 30. The propeller 29 converts rotary motion from the engine 10 to provide propulsive force to the aircraft.

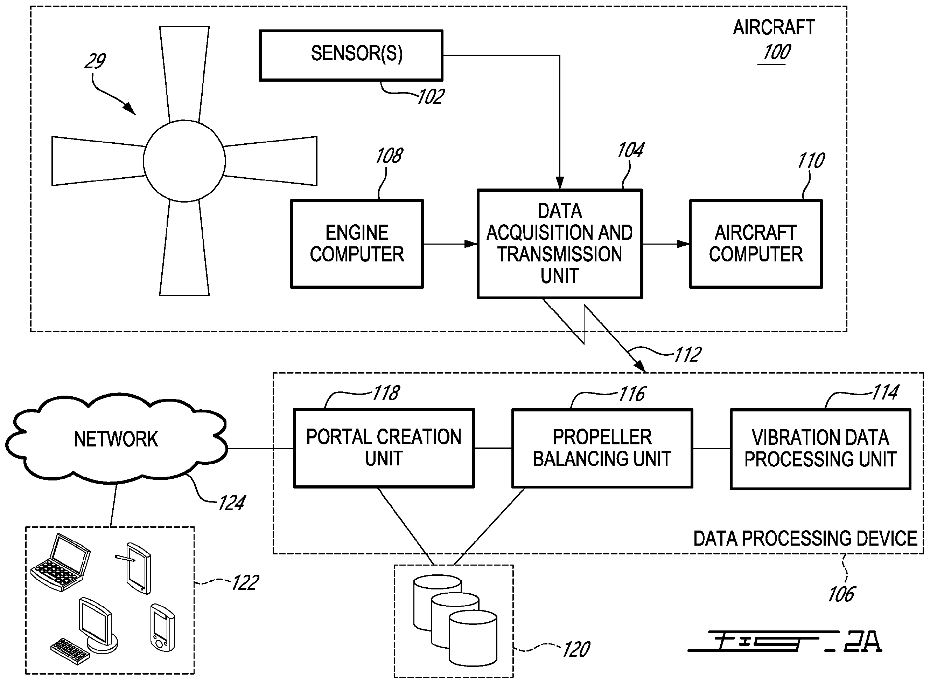

FIG. 2A illustrates an example aircraft 100, which may be any type of propeller-driven aircraft 100. At least one sensor 102 is provided per engine (reference 10 in FIG. 1) of the aircraft 100, for collecting measurement data from the propeller 29 while the aircraft is in flight. The sensor(s) 102 may comprise, but are not limited to, at least one accelerometer, at least one phase angle sensor, at least one torque sensor, and/or at least one altitude meter. The measurement data collected by the sensor(s) 102 may be referred to as "full-flight data". As used herein, the term "full-flight data" refers to data (aircraft and engine operational data parameters) which is collected in real-time, throughout the duration of a flight of the aircraft 100, to provide a complete indication of engine performance during flight, as opposed to snapshot data, which is collected at one point in time during flight and not in real-time. In one embodiment, the measurement data corresponds to the acceleration of the front of the engine 10 in a direction normal to the propeller shaft. When the propeller 29 is out of balance, as the center of mass rotates around the axis of rotation, the resulting centripetal force tries to pull the propeller 29 towards the center of mass. This rotating imbalance force acts on the mass of the engine 10 and propeller 29 and accelerates it. This acceleration is measured by the sensor(s) 102.

The sensor(s) 102 may be mounted directly on the engine 10, proximate to the propeller 29, in order to measure the acceleration of the propeller 29 as well as the phase angle of the propeller shaft. The installation may be permanent or temporary. A permanent mount may be performed during manufacture of the engine 10. When the aircraft 100 is assembled, the sensor(s) 102 may be connected to an existing aircraft harness (not shown). One or more additional cables, adapters, connectors, and/or harnesses may be added in order to connect the sensor(s) 102 to the existing aircraft harness. A temporary mount may be performed after manufacture of the engine 10 and/or after aircraft assembly, such as during aircraft maintenance.

The measurement data collected by the sensor(s) 102 may be transmitted to an aircraft-mounted electronic device (referred to herein as a "data acquisition and transmission unit" 104), via the existing aircraft harness and/or additional cables, adapters, connectors, and/or harnesses. Alternatively, transmission of the data collected by the sensor(s) 102 is performed wirelessly. Therefore, the sensor(s) 102 may be configured for providing the measurement data to the data acquisition and transmission unit 104 via any suitable wired or wireless communication path, including RS-232, USB, USB 2.0, USB 3.0, USB-C, SATA, e-SATA, ThunderboltTM, Ethernet, Wi-Fi, ZigbeeTM, BluetoothTM, and the like.

The data acquisition and transmission unit 104 may take various forms, such as a Flight-data Acquisition, Storage, and Transmission (FASTTM) box, as manufactured by Pratt & Whitney Canada, or any other computer-controlled unit that receives data from various aircraft and engine systems and sensors. In one embodiment, the data acquisition and transmission unit 104 transmits the received data off-aircraft to one (or more) data processing device(s) as in 106 adapted to communicate with a plurality of client devices 122 via a network 124, such as the Internet, a cellular network, Wi-Fi, or others known to those skilled in the art. As will be discussed further below, the data processing device 106 is configured to determine a propeller balancing solution for the aircraft 100 and output the propeller balancing solution as determined to the device(s) 122.

In some embodiments, the data acquisition and transmission unit 104 may be configured to store the data received from the aircraft systems and sensors in memory prior to transmitting the received data to the data processing device(s) 106, which in turn computes the propeller balancing solution. In yet another embodiment, the data acquisition and transmission unit 104 may be configured to store the received data and compute the propeller balancing solution on-board.

The data acquisition and transmission unit 104 may comprise one or more antenna, one or more processors, and a memory (none shown). The one or more antenna enable establishment of a connection (e.g., wireless) with the data processing device 106. The processor(s) may be coupled to a data bus of the aircraft 100 for receiving the measurement data and any other data from the aircraft and engine systems and sensors (e.g., from the sensor(s) 102). In some embodiments, the measurement data is transmitted to and received at the data acquisition and transmission unit 104 using the Aeronautical Radio Inc. (ARINC) 429 data transfer standard for aircraft avionics. Other data standards may also be used, such as ARINC 615, ARINC 717, and MIL-STD-1553. It should be understood that, while FIG. 2A illustrates (for clarity purposes) a single data acquisition and transmission unit 104 having both data acquisition and data transmission functionalities, more than one unit as in 104 may be provided. For example, the aircraft 100 may comprise a data acquisition unit separate from the data transmission unit.

The illustrated data acquisition and transmission unit 104 is configured to process the measurement data received from the sensor(s) 102 in order to obtain vibration data for the engine 10 and/or the propeller 29. In one embodiment, the vibration data comprises propeller speed as well as phase angle and magnitude (or level) of engine vibration. Speed may be denoted as a Rotation Per Minute (RPM) of the propeller 29. The sensor(s) 102 may act as a tachometer to measure the RPM of the propeller 29. One or more additional sensors may also be provided for this purpose. Magnitude may be denoted as a peak velocity in units of Inches Per Second (IPS). The phase angle (denoted in degrees) is found by detecting when one particular propeller blade passes the sensor(s) 102, and corresponds to the relationship between the waveform of the vibration magnitude signal to the angular position of the propeller 29. In one embodiment, the data acquisition and transmission unit 104 may be configured to digitize the measurement data if received in analog form, and to determine the vibration data from the digitized data.

In some embodiments, a dedicated device (referred to herein as a "Propeller Balance Monitoring System" or PBMS, not shown) may be provided to pre-condition the propeller vibration and phase angle data for live streaming to the data acquisition and transmission unit 104. In particular, the PBMS may be configured to perform conversion of the measurement data from an analog form to a digitized form. The sensor(s) 102 are illustratively connected to the PBMS via a suitable harness. The PBMS may be integrated with the data acquisition and transmission unit 104 or provided separately therefrom.

In one embodiment, the data acquisition and transmission unit 104 also receives data from an engine computer 108 and/or an aircraft computer 110. This data will be collectively referred to as aircraft data, and denote engine and/or aircraft performance parameters. The aircraft computer 110 may be an aircraft management controller (AMC), a flight management system (FMS), an aircraft digital computer system, or any other device used for computing inside an aircraft 100. The engine computer 108 may be any type of computing unit of an engine 10, such as an engine control unit (ECU), an engine electronic controller (EEC), an engine electronic control system, and a Full Authority Digital Engine Controller (FADEC). Data transmitted from the engine computer 108 and/or the aircraft computer 110 to the data acquisition and transmission unit 104 may be provided over a dedicated communication bus or any other existing communication system of the aircraft 100. Example data provided by the aircraft computer 110 comprises airspeed, altitude, stability, and position of the aircraft 100 at any point in time during a flight. Example data provided by the engine computer 108 comprises torque, speed, rating, torque stability, propeller speed stability, and compressor speed stability of the engine 10 at any point in time during engine operation.

For purposes of computing a propeller balancing solution, the data acquisition and transmission unit 104 is configured to transmit the vibration data to the data processing device 106 via a communication link 112. In one embodiment, the communication link 112 is wireless. The wireless communication may be established upon engine start up with the aircraft 100 parked, after completion of a flight mission of the aircraft 100, or after engine shutdown. In other embodiments, the communication link 112 may be wired (e.g., USB, Ethernet, or the like). The vibration data is then used for propeller balancing, as will be described further herein.

In some embodiments, the vibration data is transmitted to the data processing device 106 in real-time or at regular intervals during a flight mission of the aircraft 100, based on specific operational conditions. In other embodiments, the vibration data is transmitted to the data processing device 106 at the end of at least one flight mission of the aircraft 100. The vibration data may be transmitted to the data processing device 106 (for determining the balancing solution) at the end of every flight mission, after every other flight mission, or after any suitable number of flight missions of the aircraft 100, depending on the number of flight missions required to obtain full-flight data for the aircraft 100. For example, for an aircraft 100 that requires data to be collected over five (5) hours in order to perform propeller balancing, if a given flight mission of the aircraft 100 lasts three (3) hours only, the vibration data needs to be collected and transmitted over two (2) flight missions of the aircraft 100. Conversely, if the aircraft's flight mission lasts seven (7) hours, the vibration data needs only be collected and transmitted over one (1) flight mission for propeller balancing purposes.

As used herein, the term "mission" refers to a flight to perform a specific task. The mission may be defined by various parameters, such as duration, destination, cargo, and any flying parameters to be used during the mission, such as propeller speed or maximum altitude. For example, operator X may have aircraft A and B fly at a propeller speed of 1050 RPM wile aircraft C flies at a propeller speed of 975 RPM. The value associated for the flight criteria "propeller speed" may therefore differ between aircraft A and B and aircraft C. In some embodiments, operator X may define a unique set of flight criteria and associated values for each flight of an aircraft as a function of the specific flight parameters of a given flight, such as propeller speeds, cruising altitudes, etc.

The data processing device 106 may comprise a series of servers corresponding, but not limited, to a microserver, a web server, an application server, and a database server. In one embodiment, the data processing device 106 is a server provided on the ground (referred to herein as a "ground server"). It should however be understood that the methods and systems described herein may use cloud computing, such that the data processing device 106 may be a cloud server. Indeed, the systems and methods described herein may support Internet of Things (IoT) connectivity with a cloud data analytics platform. Distributed computing may also apply, such that the data processing device 106 may comprise a set of two or more servers. Any other suitable data processing device may apply. These servers are all represented by data processing device 106 in FIG. 2A. In addition, it should be understood that, while the data processing device 106 is illustrated as being remote from the aircraft 100, the balancing solution may, in some embodiments, be determined on the aircraft 100, such that the data processing device 106 may be provided on-board the aircraft 100 (e.g., as part of the data acquisition and transmission unit 104) as described elsewhere.

The data processing device 106 illustratively comprises a vibration data processing unit 114, a propeller balancing unit 116, and a portal creation unit 118. It should be understood that the propeller balancing unit 116 and the portal creation unit 118 may be provided directly on the data processing device 106, as illustrated, or separately therefrom.

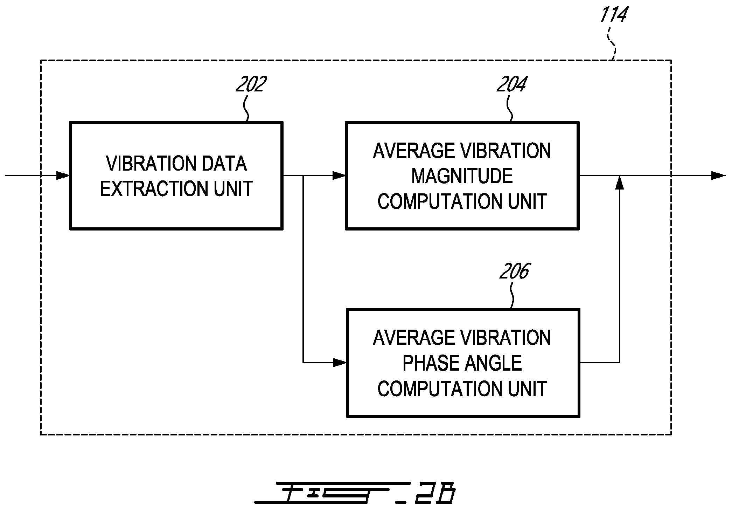

As shown in FIG. 2B, in one embodiment, the propeller balancing unit 116 illustratively comprises a vibration data extraction unit 202, a vibration average magnitude computation unit 204, and a vibration average phase angle computation unit 206. The vibration data processing unit 114 is configured to process the vibration data received from the data acquisition and transmission unit 104. In particular, after at least one flight mission, the vibration data processing unit 114 is configured to extract the phase angle and magnitude of engine vibration from the received vibration data (using the vibration data extraction unit 202) and to compute an average vibration magnitude (using the average vibration magnitude computation unit 204) and an average vibration phase angle (using the average vibration phase angle computation unit 204).

In one embodiment, the average vibration magnitude and the average vibration phase angle are computed at units 204 and 206, respectively, for at least one selected flight condition (i.e. for at least one selected flight segment or phase and/or at least one selected time period or duration) of a given flight mission. Indeed, average propeller vibration characteristics are illustratively computed for several engine and/or aircraft operational conditions, for trend monitoring and balancing purposes. The selected flight condition(s) may vary from one flight mission to the next and may comprise any suitable flight segment(s) and any suitable number of flight hours. The duration over which the vibration magnitude and the vibration phase angle are average may depend on the natural flight to flight variability observed in the recorded full-flight data. The duration may be configurable and hence tuneable per aircraft and/or engine application in order to obtain the most accurate and consistent operational trend.

In one embodiment, the selected flight condition may be provided as an input to the data processing device 106, e.g. via the client device(s) 122. A user (e.g., an operator of the aircraft 100) may indeed provide an indication of flight segment(s) and/or flight duration(s) for which propeller balancing is to be performed. In another embodiment, the vibration data processing unit 114 may be configured to automatically identify, from the vibration data received from the data acquisition and transmission unit 104, one or more flight condition(s) during which propeller imbalance is most affected and accordingly identify the selected flight segment(s) and/or the selected flight duration(s). For this purpose, the vibration data processing unit 114 (e.g., the vibration data extraction unit 202) may compare the vibration data to a predetermined threshold, determine one or more flight segment(s) during which vibration is above the threshold (meaning that propeller imbalance is most affected), and determine for how long the aircraft 100 has been operating at the excessive vibration level in order to determine the flight duration(s). The vibration magnitude and the vibration phase angle are then averaged for the flight segment(s) and/or the flight duration(s) as determined.

The threshold may be determined by an operator of the aircraft 100. The user may indeed provide an indication, e.g. via their client device 122, of the threshold at which propeller balancing is to be performed. The average vibration magnitude and the average vibration phase angle may then be computed at units 204 and 206 once the user-defined threshold is reached. The threshold may also be set according to regional and/or other types of aircraft regulations or as a function of the aircraft's mission or of a number of aircraft parameters (e.g., aircraft size, engine type, etc.). It should however be understood that, in other embodiments, the propeller balancing solution may be computed for any level of vibration, thus alleviating the need for comparison of the vibration magnitude to a threshold.

In one embodiment, the selected flight condition corresponds to a stable cruise condition or constant climb phases of flight. Other suitable flight conditions (e.g., ground operation) may apply. As understood by those skilled in the art, a constant climb phase of flight corresponds to a flight phase during which the aircraft 100 climbs to a given altitude at a constant climb rate. A stable cruise condition corresponds to an operating condition of the aircraft 100 during which certain flight criteria, which may correspond to engine parameters and/or aircraft parameters, are attained. Stable cruise condition may be operator-specific. Example aircraft parameters are minimum altitude, stability duration, minimum calibrated air speed, altitude stability, and calibrated airspeed stability. Example engine parameters are propeller rotational speed, engine torque, engine rating, engine torque stability, engine propeller speed (Np) stability, and engine compressor speed (Nh) stability.

The average vibration magnitude and the average vibration phase angle computed by the vibration data processing unit 114 are then provided to the propeller balancing unit 116 for further processing. As will be discussed further below, the propeller balancing unit 116 determines a propeller balancing solution (or updates a previously computed balancing solution) based on the average vibration magnitude, the average vibration phase angle, and propeller calibration data (e.g., influence coefficients) retrieved from memory. In one embodiment, determining the propeller balancing solution comprises determining a value and a placement location for at least one weight (or mass) to be added to (or removed from) the propeller 29 (i.e. placed on or removed from a propeller balance rim) to correct propeller imbalance (i.e. reduce vibration).

The balancing solution may be determined using at least one balance equation (e.g., provided by the engine manufacturer), based on the average vibration magnitude and the average vibration phase angle computed, from the full-flight vibration data, for the selected flight condition(s). The balancing solution is also illustratively determined based on customized influence coefficients that are specific to the propeller 29 and aircraft 100, as will be discussed further below. The balancing solution may further be determined based on the values and locations of the weights currently installed on the propeller 29.

As understood by those skilled in the art, the propeller balance rim (not shown) is a ring that is coupled to the propeller 29 and which provides a number of balance weight locations each configured to receive therein a balancing weight (selected as part of the balancing solution) for correcting propeller imbalance. Pre-classified weights can indeed be mounted directly on the propeller balance rim in order to achieve an optimum propeller assembly balanced state. In one embodiment, each balance weight location is numbered in a counter-clockwise direction beginning with location 1 and ending with location 24. As also understood by those skilled in the art, influence coefficients may be stored in memory (e.g., as a lookup table or other suitable format) to provide an indication as to which corrective balancing weight(s) will have the most impact on correcting propeller imbalance. The memory may be associated with the data acquisition and transmission unit 104 and/or with the data processing device 106. For example, the influence coefficients may be stored in a data warehouse 120 communicatively coupled to the data processing device 106. Alternatively or in addition, the influence coefficients may be stored in a memory of the data acquisition and transmission unit 104.

In one embodiment, the influence coefficients are designed for an entire fleet of aircraft and the propeller balancing unit 116 is configured to fine-tune these influence coefficients according to the propeller configuration (i.e. the physical state of the propeller 29) and/or operational characteristics (which may be retrieved from a memory associated with the data acquisition and transmission unit 104 or with the data processing device 106), such that the propeller balancing parameters (i.e. the influence coefficients) are customized for the propeller 29 (i.e. specific to the propeller hardware and therefore unique per propeller configuration and aircraft operational conditions). The propeller configuration data illustratively comprises identifying data for the propeller 29 (e.g., propeller part number, propeller serial number) and propeller weight characteristics (e.g., values and locations of counterweights currently installed on the propeller 29). The operational characteristics illustratively relate to information about the unique operational behaviour (e.g., loading of the propeller 29) associated with the manner in which the aircraft 100 is flown.

The propeller balancing unit 116 is illustratively configured to monitor the propeller configuration and/or operational behaviours over time (e.g., over the course of several days, weeks, or months) and monitor the impact of the differences in propeller configuration and/or operational behaviours on the vibration level of the aircraft 100 (and accordingly on the propeller imbalance) in order to tune the influence coefficients. For example, monitoring of the propeller configuration and operational characteristics over two (2) months may indicate that installing a weight of 10 grams on a given blade of the propeller 29 consistently results in a decrease in propeller vibration by a magnitude of 1 IPS. Generic influence coefficients can be adjusted or tuned (to obtain customized influence coefficients) in the propeller balancing unit 116 to differentiate specific balance solutions dependent on selected propeller configurations and/or aircraft flight segment(s). As such, influence coefficients, which are unique per propeller configuration and aircraft operational conditions, are used by the propeller balancing unit 116 to select the appropriate balancing weights to be used as part of the balancing solution.

The data processing device 106 may then optionally send the propeller balancing solution determined by the propeller balance unit 116 to the data warehouse 120, which maintains a history of propeller balancing solutions over time. In other embodiments, the propeller balancing solution may be stored in a memory (not shown) associated with the data acquisition and transmission unit 104. In one embodiment, the data warehouse 120 stores counterweight mass values and locations associated with each propeller balancing solution determined by the propeller balancing unit 116. The data warehouse 120 further stores the existing propeller configuration (based on information obtained from the diagnostic system of the aircraft 100, not shown) as well as the propeller calibration data (i.e. the influence coefficients), along with the newly determined propeller balancing solution. The propeller balancing solution is then made available to one or more client devices 122 over a network 124, such that the balancing solution can be readily installed by maintenance personnel. In one embodiment, the provided information comprises a weight and location for installation on the propeller balance rim.

It should be understood that, in some embodiments (e.g., where the data processing device 106 is provided on-board the aircraft 100), the propeller balancing solution may be made available to the client device(s) 122 planeside. For example, the propeller balancing solution may be rendered on the client device 122 planeside, using any suitable secure wireless connection (and, e.g., IoT connectivity technology). Alternatively, upon landing of the aircraft 100, the user may connect their client device 122 to the aircraft 100 using any suitable wired connection (e.g. USB, Ethernet, or the like) for the purpose of manually retrieving the balancing solution determined by the propeller balancing unit 116 and downloading the propeller balancing solution onto their client device 122. In some embodiments, a portable electronic device, such as a USB flash drive or other suitable data storage device, that is associated with the client device 122 may be connected to a communication port of the aircraft 100 for downloading the propeller balancing solution.

The data warehouse 120 described herein may be provided as collections of data or information organized for rapid search and retrieval by a computer. It is structured to facilitate storage, retrieval, modification, and deletion of data in conjunction with various data-processing operations. The data warehouse 120 may consist of a file or sets of files that can be broken down into records, each of which consists of one or more fields. Database information may be retrieved through queries using keywords and sorting commands, in order to rapidly search, rearrange, group, and select the field. The data warehouse 120 may be any organization of data on a data storage medium, such as one or more servers. It should be understood that the data warehouse 120 may also be provided in a cloud-based server-less environment.

The client devices 122 comprise any portable or handheld communication device, such as a smartphone, a desktop computer, a portable computer, a tablet, or the like, adapted to communicate over at least one network. The network 124 is capable of carrying data and can involve wired connections, wireless connections, or a combination thereof. The network 124 may involve different network communication technologies, standards and protocols, for example. The network 124 may include, but is not limited to, the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and any combination thereof.

The portal creation unit 118 is configured to create a portal remotely accessible by the one or more client devices 122 over the network 124, and to display the balancing solution (retrieved from the data warehouse 120 or received directly from the propeller balancing unit 116) within a graphical user interface of the web portal. As used herein, the term "portal" refers to a specially designed website that renders (i.e. visually displays) the balancing solution and related information for viewing by the client device(s) 122. In one embodiment, the portal is web-based and the portal (and associated graphical user interface) is illustratively displayed to users in a web browser, over the network 124. As will be discussed further below, in one embodiment, the portal creation unit 118 is configured to generate an intuitive representation of the balancing solution that can be used by maintenance personnel to perform a propeller balance maintenance action. The representation of the balancing solution can also be used to enable the analysis of how the balancing solution is trending, as well as to enable the analysis of reliability of the balancing solution based on data quality and scatter. The portal creation unit 118 is indeed configured to create a representation of the balancing solution that comprises trending and visualization of propeller vibration and balancing characteristics over time, including the magnitude and location of imbalance. In one embodiment, the web-based portal may be subscription-based and may have different service levels associated therewith, including the ability to proactively schedule propeller balance maintenance actions. The web-based portal may also include automated customer alerting functions based on pre-configured threshold detections and/or anomaly signatures.

It should be understood that the data processing device 106 may be configured to provide the balancing solution (e.g., to the client device(s) 122) in any suitable fashion other than through a web portal, using any suitable communication means. For example, the propeller balancing solution may be provided in a text format (e.g. stored as an Extensible Markup Language (XML) file in the data warehouse 120) indicative of the values and locations of balancing weights that are to be installed on (or removed from) the propeller rim. The balancing solution may then be transmitted to the client device(s) 122 using text messaging or the like.

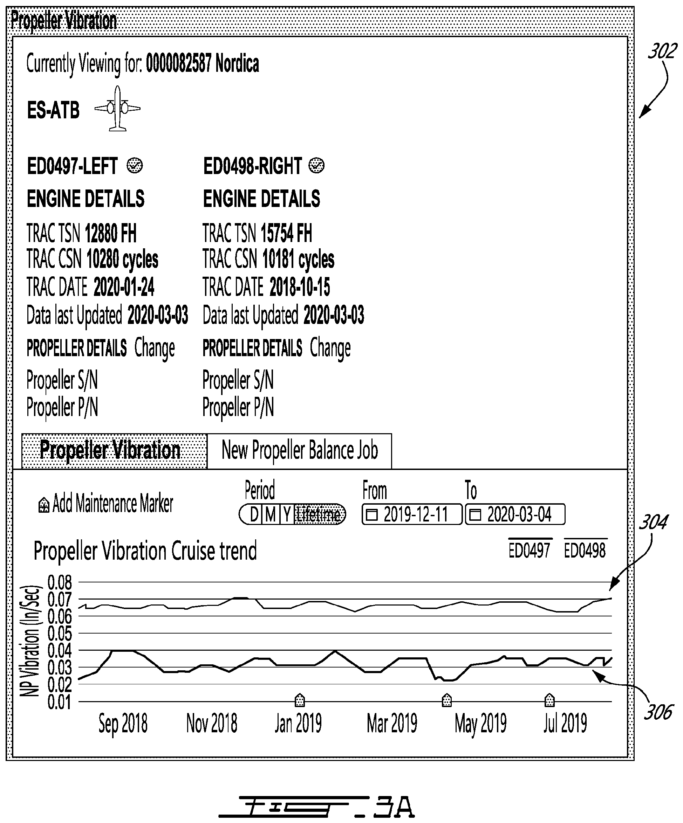

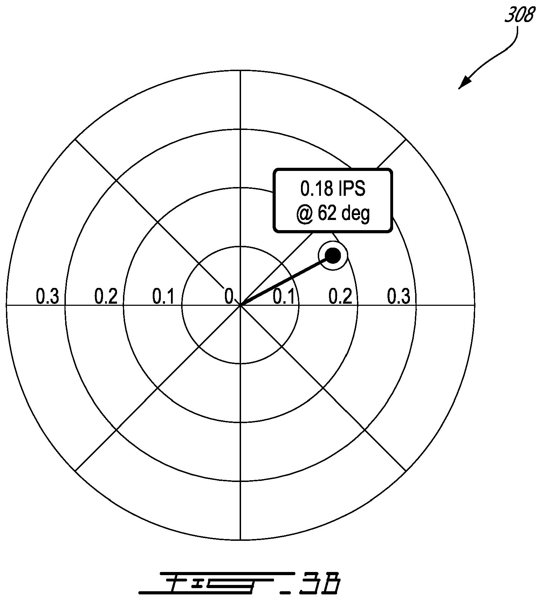

FIG. 3A is a screenshot of a web portal interface 302 presenting a trend line overview of propeller vibration for two engines over time, in accordance with one embodiment. In the example of FIG. 3A, a first trend plot 304 is presented for a first engine and a second trend plot 306 is presented for a second engine. The trend plot representation is rendered (i.e. displayed) in the remote web portal to enable maintenance personnel to identify engines with high levels of vibration. Maintenance personnel is then able to view details of propeller vibration by selecting (e.g., clicking on) an individual data point through the graphical user interface, using any suitable input device (e.g., a mouse and/or keyboard) of the client device (reference 122 in FIG. 2A) on which the web portal interface is rendered. This is shown in FIG. 3B, which is a screenshot of a web portal interface presenting a plot 308 of propeller vibration for one engine, at a given point in time. As can be seen in FIG. 3B, by selecting an individual data point on a given trend line (304 or 306) of FIG. 3A, a user can view propeller vibration details. In one embodiment, the propeller vibration details are provided in a polar coordinate chart scaled to the level of vibration normally experienced by the propeller 29. For the given data point, both the magnitude (e.g., 0.18 IPS) and phase angle (e.g., 62 degrees) of propeller vibration imbalance are represented on the polar chart, as shown in FIG. 3B. This representation may enable the user to intuitively assess the reliability of the propeller balancing solution calculation over time as the user can readily visualize whether a calculated propeller balance solution varies widely or is fairly consistent over time.

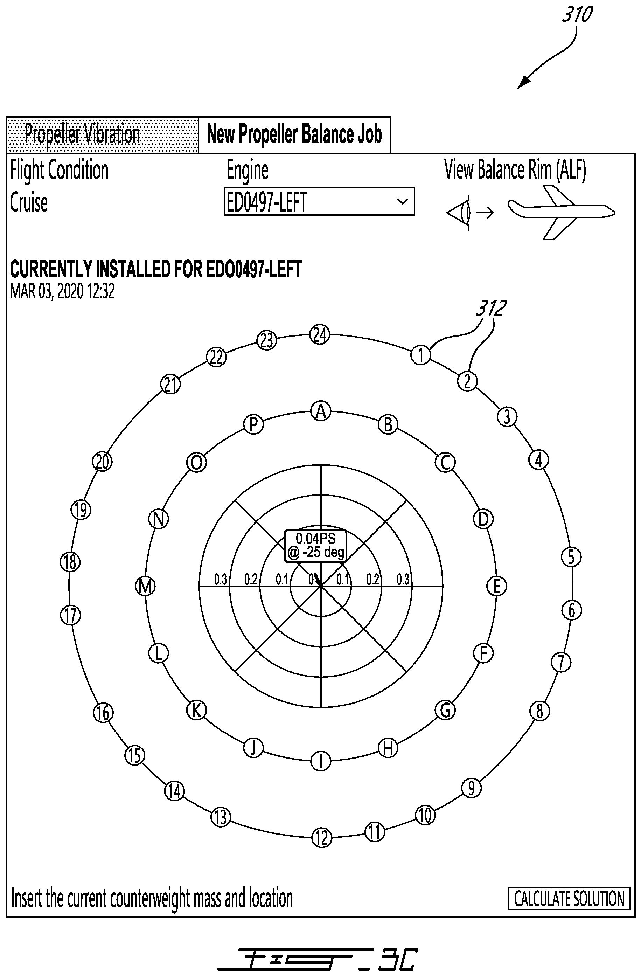

The web portal may also be used to represent the existing propeller configuration (i.e. counterweight locations) and the propeller calibration data (e.g., influence coefficients) along with the propeller balancing solution. These may be retrieved from the data warehouse (reference 120 in FIG. 2A). In this manner, maintenance personnel may no longer need to use ground supporting equipment and physically inspect the propeller hardware to conduct a propeller balancing maintenance action. The visualization of the locations of weights around the propeller balance rim may facilitate understanding of new weight locations proposed in the balancing solution. This is illustrated in FIG. 3C, which is a screenshot of a web portal interface 310 showing weights 312 that are currently installed on a propeller balance rim, in accordance with one embodiment. The current vibration magnitude and phase angle (0.04 IPS at -25 degrees) are also indicated at the center of the plot presented on the web portal interface 310.

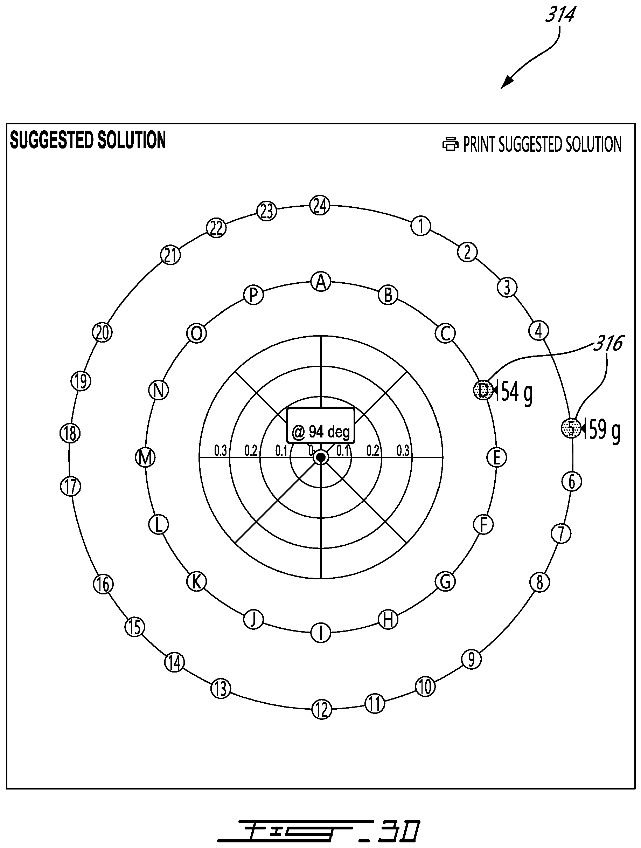

FIG. 3D is a screenshot of a web portal interface 314 presenting a propeller balancing solution, in accordance with one embodiment. The propeller balancing solution is illustratively computed by the propeller balancing unit 116 (based on the propeller vibration trend and current propeller configuration settings, as described herein above) and rendered on the web portal by the portal creation unit 118. If any of the weights presented in the web portal interface 314 are incorrect, the user may change these weights by adjusting the counterweight locations around the propeller balance rim and/or editing the values of the counterweights (using any suitable input device of the client device 122). In this manner, maintenance personnel is provided with the flexibility to work with counterweights that are at their disposal, rather than needing to strictly adhere to the prescribed counterweights calculated by the data processing device 106.

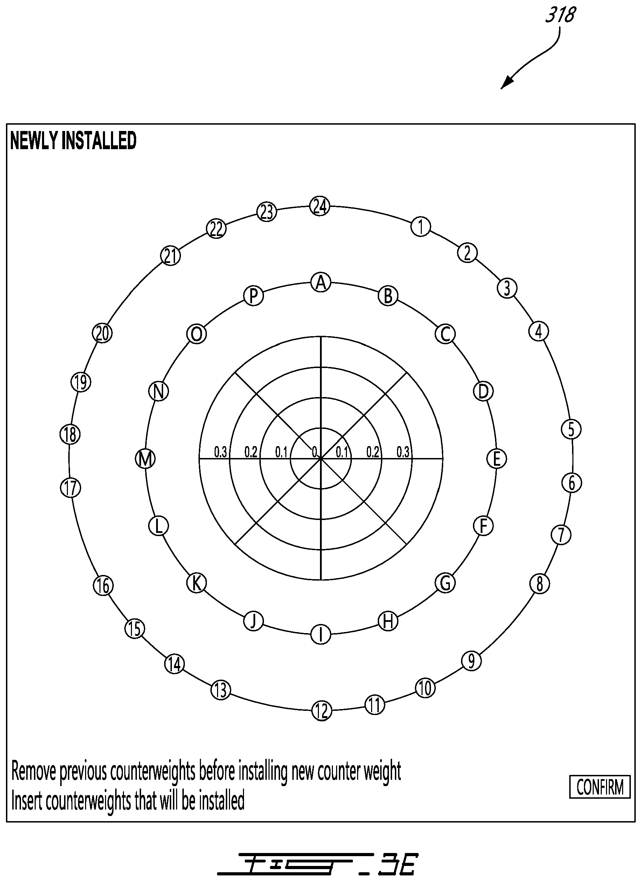

In the example of Fig. 3D, counterweights 316 are selected by the user for modification. The revised propeller configuration (i.e. the adjusted weight configuration) is then received at the portal creation unit 118 of the data processing device 106. The revised propeller configuration is then sent to the propeller balancing unit 116, which re-computes the balancing solution accordingly. In particular, the propeller balancing unit 116 calculates the expected vibration magnitude if the counterweights as modified by the user were to be installed on the propeller. The propeller balancing unit 116 then outputs a new balancing solution, which is then presented to the user in an updated web portal interface 318, as shown in FIG. 3E.

In some embodiments, the vibration data processing unit 114, the propeller balancing unit 116, and/or the portal creation unit 118 may be implemented in hardware, using analog and/or digital circuit components. For example, the vibration data processing unit 114, the propeller balancing unit 116, and/or the portal creation unit 118 may each be provided as an application-specific integrated circuit (ASIC) or a field programmable gate array (FPGA). In some embodiments, the vibration data processing unit 114, the propeller balancing unit 116, and/or the portal creation unit 118 are each provided as a non-transitory computer readable medium having stored thereon program code executable by a processor for carrying out the instructions of the program code.

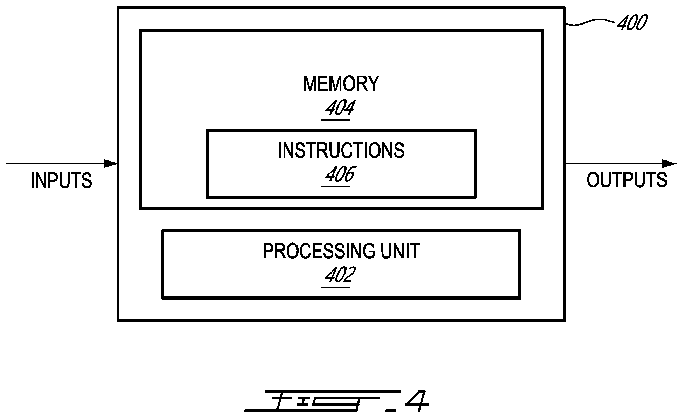

In other embodiments, the vibration data processing unit 114, the propeller balancing unit 116, and/or the portal creation unit 118 are each implemented using a combination of hardware and software components, as illustrated in FIG. 4. In particular, FIG. 4 is an example embodiment of a computing device 400 that may be used for implementing the vibration data processing unit 114, the propeller balancing unit 116, and/or the portal creation unit 118. As depicted, the computing device 400 includes at least one processing unit 402 and memory 404. The memory 404 has stored therein computer-executable instructions 406. The processing unit 402 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 404 may comprise any suitable known or other machine-readable storage medium. The memory 404 may comprise non-transitory computer readable storage medium, for example, but not limited to, an electronic, magnetic, optical, electromagnetic, infrared, or semiconductor system, apparatus, or device, or any suitable combination of the foregoing. The memory 404 may include a suitable combination of any type of computer memory that is located either internally or externally to computing device 400, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 404 may comprise any storage means (e.g., devices) suitable for retrievably storing machine-readable instructions 406 executable by processing unit 402.

The instructions 406 may be implemented in a high level procedural or object oriented programming or scripting language, or a combination thereof, to communicate with or assist in the operation of a computer system, for example the vibration data processing unit 114, the propeller balancing unit 116, and/or the portal creation unit 118. Alternatively, the instructions 406 may be implemented in assembly or machine language. The language may be a compiled or interpreted language. The instructions 406 may be readable by a general or special-purpose programmable computer.

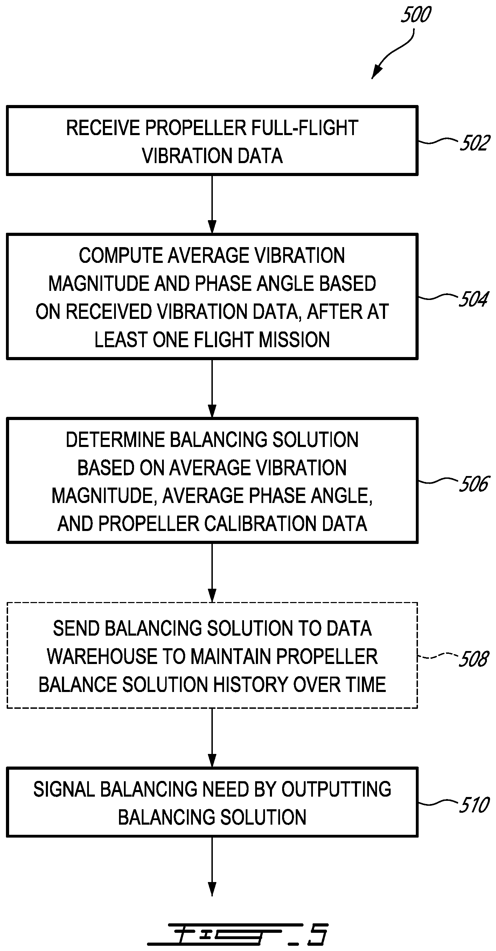

Referring now to FIG. 5, there is illustrated a flowchart for an example embodiment of a method 500 for propeller balancing, as performed by the instructions 406 when executed by the processing unit 402 of the computing device 400 (e.g., as performed at the data processing device 106). The method 500 comprises, at step 502, propeller full-flight vibration data is received in the manner described herein above. The full-flight propeller vibration data is data collected in real-time, during operation of the propeller in-flight. The next step 504 is to compute an average vibration magnitude and phase angle based on the vibration data received at step 502. As described herein above, the average vibration magnitude and phase angle are computed after at least one flight mission. In one embodiment, the average vibration magnitude and phase angle are computed for at least one selected flight condition (i.e. flight segment(s) and/or flight duration(s)) for which the propeller vibration exceeds a predetermined threshold.

A propeller balancing solution is then determined at step 506, based on the average vibration magnitude and phase angle computed at step 504 and on propeller calibration data (i.e. influence coefficient(s) customized for the propeller and aircraft), using at least one balance equation. The balancing solution may then be optionally stored to memory (e.g., sent to a data warehouse) at step 508 in order to maintain a history of propeller balance solutions over time. At step 510, a balancing need is then signalled by outputting the balancing solution determined at step 506, for maintenance action purposes. The balancing need may be signaled by rendering the balancing solution on a web portal accessible to one or more client devices over a network, such as the Internet. As discussed herein above, a graphical user interface of the web portal may be used to allow users to correct the propeller balance solution determined at step 506. The web portal may also be used to render a current configuration of the propeller, as well as propeller vibration trend overviews.

In one embodiment, using the systems and methods described herein may alleviate the need for performing engine ground runs to verify vibration levels before and after a propeller balance maintenance action is performed. In one embodiment, using the systems and methods described herein, may also alleviate the need for connecting expensive ground support equipment to the aircraft 100 at the time of performing a propeller balance maintenance action. In one embodiment, using the systems and methods described herein, may further alleviate the need for changing the sensor(s) used to support propeller balancing. In some embodiments, using the systems and methods described herein, it may become possible to conduct propeller balancing without having to physically look at the propeller hardware to identify the current propeller configuration (e.g. counterweight masses and locations). In some embodiments, using the systems and methods described herein may also enable the calculation of a propeller balancing solution before the aircraft returns to the hangar, and may allow to feed the balancing solution to maintenance personnel in order to prepare for proactive maintenance actions. The systems and methods described herein may also allow to fine tune propeller calibration data (e.g. influence coefficients) to a specific set of hardware, rather than assuming that the balancing parameters are the same for an aircraft entire fleet.

Various aspects of the systems and methods described herein may be used alone, in combination, or in a variety of arrangements not specifically discussed in the embodiments described in the foregoing. For example, aspects described in one embodiment may be combined with aspects described in other embodiments. Although particular embodiments have been shown and described, it will be apparent to those skilled in the art that changes and modifications may be made, while the scope of the invention is defined by the following claims.

## Claims

1. A method for propeller balancing of an aircraft (100), the method comprising:
operating a propeller (29) in-flight;
receiving propeller vibration data during operation of the propeller (29) in-flight;
computing, after at least one flight of the aircraft (100), an average vibration magnitude and an average vibration phase angle based on the propeller vibration data;
retrieving propeller configuration data from memory;
retrieving, from memory, propeller calibration data comprising at least one influence coefficient indicative of an impact of at least one balancing weight on correcting an imbalance of the propeller (29);
tuning the at least one influence coefficient according to one of the propeller configuration data and a flight condition of the aircraft (100);
determining a propeller balancing solution by identifying, using at least one balance equation and based on the average vibration magnitude, the average vibration phase angle, and the at least one influence coefficient, a value for the at least one balancing weight and a placement location for the at least one balancing weight for correcting the imbalance of the propeller (29); and
generating a balancing need indication by outputting the propeller balancing solution.

2. The method of claim 1, wherein receiving the propeller vibration, computing the average vibration magnitude and the average vibration phase angle, determining the propeller balancing solution, and generating the balancing need indication are performed at a ground server, the propeller vibration data received at the ground server through a wireless transmission, performed at a cloud server, or performed on-board the aircraft (100).

3. The method of claim 1 or 2, wherein the average vibration magnitude and the average vibration phase angle are computed for a selected flight segment and/or a selected flight duration determined by identifying at least one time period for which the propeller vibration data exceeds a predetermined threshold and for which the aircraft (100) or the propeller (29) is operated in a given flight condition.

4. The method of any preceding claim, wherein outputting the propeller balancing solution comprises rendering the propeller balancing solution on a user interface accessible by at least one device over a network.

5. The method of claim 4, further comprising retrieving an existing propeller configuration from memory (404) and rendering the existing propeller configuration on the user interface.

6. The method of claim 4 or 5, further comprising receiving, via the user interface, at least one correction to the propeller balancing solution, updating the propeller balancing solution accordingly to generate a revised propeller balancing solution, and rendering the revised propeller balancing solution on the user interface.

7. The method of any of claims 4 to 6, further comprising rendering on the user interface, based on the vibration data, a trend overview of propeller vibration over time.

8. The method of any of claims 4 to 7, further comprising rendering on the user interface, based on the vibration data, a polar chart indicative of a magnitude and a phase angle of the propeller vibration at any given point in time.

9. The method of any preceding claim, wherein the propeller balancing solution is output to at least one device planeside.

10. A system for propeller balancing of an aircraft (100), the system comprising:
a processing unit (114, 402); and
a memory (404) communicatively coupled to the processing unit (114, 402) and comprising computer-readable program instructions executable by the processing unit (114, 402) for:
receiving propeller vibration data during operation of a propeller (29) in-flight;
computing, after at least one flight of the aircraft (100), an average vibration magnitude and an average vibration phase angle based on the propeller vibration data;
retrieving propeller configuration data from memory;
retrieving, from memory, propeller calibration data comprising at least one influence coefficient indicative of an impact of at least one balancing weight on correcting an imbalance of the propeller (29);
tuning the at least one influence coefficient according to one of the propeller configuration data and a flight condition of the aircraft (100);
determining a propeller balancing solution comprising identifying, using at least one balance equation and based on the average vibration magnitude, the average vibration phase angle, and the at least one influence coefficient, a value for the at least one weight and a placement location for the at least one weight for correcting the imbalance of the propeller (29); and
generating a balancing need indication by outputting the propeller balancing solution.

11. The system of claim 10, wherein the instructions are executable by the processing unit (114, 402) for computing the average vibration magnitude and the average vibration phase angle for a selected flight segment and/or a selected flight duration determined by identifying at least one time period for which the propeller vibration data exceeds a predetermined threshold and for which one of the aircraft (100) and the propeller (29) is operated in a given flight condition.

12. The system of claim 10 or 11, wherein the instructions are executable by the processing unit (114, 402) for outputting the propeller balancing solution by rendering the propeller balancing solution on a user interface accessible by at least one client device over a network.

13. The system of any of claims 10 to 12, wherein the instructions are executable by the processing unit (114, 402) for outputting the propeller balancing solution to at least one device planeside.

## Patentansprüche

1. Verfahren zum Ausgleichen des Propellers eines Flugzeugs (100), wobei das Verfahren Folgendes umfasst:
Betreiben eines Propellers (29) während des Fluges;
Empfangen von Propellervibrationsdaten während des Betriebs des Propellers (29) im Flug;
Berechnen einer durchschnittlichen Vibrationsstärke und eines durchschnittlichen Vibrationsphasenwinkels nach mindestens einem Flug des Flugzeugs (100) auf der Grundlage der Propellervibrationsdaten;
Abrufen von Propellerkonfigurationsdaten aus dem Speicher;
Abrufen von Propellerkalibrierungsdaten aus dem Speicher, die mindestens einen Einflusskoeffizienten umfassen, der den Einfluss mindestens eines Ausgleichsgewichts auf die Korrektur einer Unwucht des Propellers (29) angibt;
Abstimmen des mindestens einen Einflusskoeffizienten entsprechend den Propellerkonfigurationsdaten oder einem Flugzustand des Flugzeugs (100);
Bestimmen einer Lösung zum Ausgleichen des Propellers durch Identifizieren eines Wertes für das mindestens eine Ausgleichsgewicht und eines Platzierungsorts für das mindestens eine Ausgleichsgewicht zum Korrigieren der Unwucht des Propellers (29) unter Verwendung mindestens einer Ausgleichsgleichung und basierend auf der durchschnittlichen Vibrationsstärke, dem durchschnittlichen Vibrationsphasenwinkel und dem mindestens einen Einflusskoeffizienten; und
Erzeugen einer Anzeige für den Ausgleichbedarf durch Ausgabe der Propellerausgleichlösung.

2. Verfahren nach Anspruch 1, wobei das Empfangen der Propellervibration, das Berechnen der durchschnittlichen Vibrationsstärke und des durchschnittlichen Vibrationsphasenwinkels, das Bestimmen der Propellerausgleichlösung und das Erzeugen der Anzeige für den Ausgleichbedarf auf einem Bodenserver durchgeführt werden, wobei die Propellervibrationsdaten per drahtloser Übertragung auf dem Bodenserver empfangen werden, auf einem Cloud-Server ausgeführt werden oder an Bord des Flugzeugs (100) ausgeführt werden.

3. Verfahren nach Anspruch 1 oder 2, wobei die durchschnittliche Vibrationsstärke und der durchschnittliche Vibrationsphasenwinkel für ein ausgewähltes Flugsegment und/oder eine ausgewählte Flugdauer berechnet werden, die durch Identifizierung mindestens eines Zeitraums bestimmt wird, für den die Propellervibrationsdaten einen vorgegebenen Schwellenwert überschreiten und für den das Flugzeug (100) oder der Propeller (29) in einem gegebenen Flugzustand betrieben wird.

4. Verfahren nach einem der vorhergehenden Ansprüche, wobei das Ausgeben der Propelleraugleichlösung das Rendern der Propellerausgleichlösung auf einer Benutzerschnittstelle umfasst, auf die von mindestens einem Gerät über ein Netzwerk zugegriffen werden kann.

5. Verfahren nach Anspruch 4, ferner umfassend das Abrufen einer vorhandenen Propellerkonfiguration aus dem Speicher (404) und das Rendern der vorhandenen Propellerkonfiguration auf der Benutzerschnittstelle.

6. Verfahren nach Anspruch 4 oder 5, ferner umfassend das Empfangen von mindestens einer Korrektur an der Propellerausgleichlösung über die Benutzerschnittstelle, das entsprechende Aktualisieren der Propellerausgleichlösung, um eine überarbeitete Propellerausgleichlösung zu erzeugen, und das Rendern der überarbeiteten Propellerausgleichlösung auf der Benutzerschnittstelle.

7. Verfahren nach einem der Ansprüche 4 bis 6, ferner umfassend das Rendern einer Trendübersicht der Propellervibration im Zeitverlauf auf der Benutzeroberfläche basierend auf den Vibrationsdaten.

8. Verfahren nach einem der Ansprüche 4 bis 7, ferner umfassend das Rendern eines Polardiagramms auf der Benutzeroberfläche basierend auf den Vibrationsdaten, das die Stärke und den Phasenwinkel der Propellervibration zu einem beliebigen Zeitpunkt angibt.

9. Verfahren nach einem der vorhergehenden Ansprüche, wobei die Lösung zum Ausgleichen des Propellers an mindestens ein Gerät auf der Flugzeugseite ausgegeben wird.

10. System zum Ausgleichen des Propellers eines Flugzeugs (100), wobei das System Folgendes umfasst:
eine Verarbeitungseinheit (114, 402); und
einen Speicher (404), der kommunikativ mit der Verarbeitungseinheit (114, 402) gekoppelt ist und computerlesbare Programmanweisungen umfasst, die durch die Verarbeitungseinheit (114, 402) ausführbar sind zum:
Empfangen von Propellervibrationsdaten während des Betriebs eines Propellers (29) im Flug;
Berechnen einer durchschnittlichen Vibrationsstärke und eines durchschnittlichen Vibrationsphasenwinkels nach mindestens einem Flug des Flugzeugs (100) auf der Grundlage der Propellervibrationsdaten;
Abrufen von Propellerkonfigurationsdaten aus dem Speicher;
Abrufen von Propellerkalibrierungsdaten aus dem Speicher, die mindestens einen Einflusskoeffizienten umfassen, der den Einfluss mindestens eines Ausgleichsgewichts auf die Korrektur einer Unwucht des Propellers (29) angibt;
Abstimmen des mindestens einen Einflusskoeffizienten entsprechend den Propellerkonfigurationsdaten oder einem Flugzustand des Flugzeugs (100);
Bestimmen einer Lösung zum Ausgleichen des Propellers, umfassend das Identifizieren eines Wertes für das mindestens eine Gewicht und eines Platzierungsorts für das mindestens eine Gewicht zum Korrigieren der Unwucht des Propellers (29) unter Verwendung mindestens einer Ausgleichsgleichung und basierend auf der durchschnittlichen Vibrationsstärke, dem durchschnittlichen Vibrationsphasenwinkel und dem mindestens einen Einflusskoeffizienten; und
Erzeugen einer Anzeige für den Ausgleichbedarf durch Ausgabe der Propellerausgleichlösung.

11. System nach Anspruch 10, wobei die Anweisungen durch die Verarbeitungseinheit (114, 402) ausführbar sind, um die durchschnittliche Vibrationsstärke und der durchschnittliche Vibrationsphasenwinkel für ein ausgewähltes Flugsegment und/oder eine ausgewählte Flugdauer zu berechnen, die durch Identifizierung mindestens eines Zeitraums bestimmt wird, für den die Propellervibrationsdaten einen vorgegebenen Schwellenwert überschreiten und für den entweder das Flugzeug (100) oder der Propeller (29) in einem gegebenen Flugzustand betrieben wird.

12. System nach Anspruch 10 oder 11, wobei die Anweisungen durch die Verarbeitungseinheit (114, 402) ausführbar sind, um die Propellerausgleichlösung auszugeben, indem die Propellerausgleichlösung auf einer Benutzerschnittstelle wiedergegeben wird, auf die mindestens ein Clientgerät über ein Netzwerk zugreifen kann.

13. System nach einem der Ansprüche 10 bis 12, wobei die Anweisungen durch die Verarbeitungseinheit (114, 402) ausführbar sind, um die Lösung zum Ausgleichen des Propellers an mindestens ein Gerät im Flugzeug auszugeben.

## Revendications

1. Procédé d'équilibrage d'hélice d'un aéronef (100), le procédé comprenant les étapes consistant à :
faire fonctionner une hélice (29) en vol ;
recevoir des données de vibration d'hélice pendant le fonctionnement de l'hélice (29) en vol ;
calculer, après au moins un vol de l'aéronef (100), une amplitude de vibration moyenne et un angle de phase de vibration moyen sur la base des données de vibration de l'hélice ;
récupérer des données de configuration de l'hélice à partir de la mémoire ;
récupérer, à partir de la mémoire, des données d'étalonnage d'hélice comprenant au moins un coefficient d'influence indicatif de l'impact d'au moins une masselotte d'équilibrage sur la correction d'un déséquilibre de l'hélice (29) ;
régler l'au moins un coefficient d'influence selon un élément parmi les données de configuration de l'hélice et une condition de vol de l'aéronef (100) ;
déterminer une solution d'équilibrage d'hélice en identifiant, à l'aide d'au moins une équation d'équilibrage et en fonction de l'amplitude de vibration moyenne, de l'angle de phase de vibration moyen et de l'au moins un coefficient d'influence, une valeur pour l'au moins une masselotte d'équilibrage et un endroit de placement pour l'au moins une masselotte d'équilibrage afin de corriger le déséquilibre de l'hélice (29) ; et
générer une indication de besoin d'équilibrage en délivrant la solution d'équilibrage d'hélice.

2. Procédé selon la revendication 1, dans lequel les étapes consistant à recevoir les vibrations de l'hélice, calculer l'amplitude de vibration moyenne et l'angle de phase de vibration moyen, déterminer la solution d'équilibrage d'hélice et générer l'indication de besoin d'équilibrage sont effectuées sur un serveur au sol, les données de vibration de l'hélice étant reçues sur le serveur au sol par l'intermédiaire d'une transmission sans fil, effectuées sur un serveur cloud ou effectuées à bord de l'aéronef (100).

3. Procédé selon la revendication 1 ou 2, dans lequel l'amplitude de vibration moyenne et l'angle de phase de vibration moyen sont calculés pour un segment de vol sélectionné et/ou une durée de vol sélectionnée déterminée en identifiant au moins une période de temps pendant laquelle les données de vibration de l'hélice dépassent un seuil prédéterminé et pendant laquelle l'aéronef (100) ou l'hélice (29) fonctionne dans une condition de vol donnée.

4. Procédé selon une quelconque revendication précédente, dans lequel la sortie de la solution d'équilibrage d'hélice comprend la mise à disposition de la solution d'équilibrage d'hélice sur une interface utilisateur accessible par au moins un dispositif sur un réseau.

5. Procédé selon la revendication 4, comprenant également la récupération d'une configuration d'hélice existante à partir de la mémoire (404) et la mise à disposition de la configuration d'hélice existante sur l'interface utilisateur.

6. Procédé selon la revendication 4 ou 5, comprenant également la réception, via l'interface utilisateur, d'au moins une correction de la solution d'équilibrage d'hélice, la mise à jour de la solution d'équilibrage d'hélice en conséquence pour générer une solution d'équilibrage d'hélice révisée et la mise à disposition de la solution d'équilibrage d'hélice révisée sur l'interface utilisateur.

7. Procédé selon l'une quelconque des revendications 4 à 6, comprenant également la mise à disposition sur l'interface utilisateur, sur la base des données de vibration, d'un aperçu des tendances des vibrations de l'hélice au fil du temps.

8. Procédé selon l'une quelconque des revendications 4 à 7, comprenant également la mise à disposition sur l'interface utilisateur, sur la base des données de vibration, d'un graphique polaire indiquant une amplitude et un angle de phase des vibrations de l'hélice à un quelconque instant donné.

9. Procédé selon une quelconque revendication précédente, dans lequel la solution d'équilibrage d'hélice est délivrée à au moins un côté plan de dispositif.

10. Système d'équilibrage d'hélice d'un aéronef (100), le système comprenant :
une unité de traitement (114 ; 402) ; et
une mémoire (404) couplée en communication à l'unité de traitement (114, 402) et comprenant des instructions de programme lisibles par ordinateur exécutables par l'unité de traitement (114, 402) pour :
recevoir des données de vibration d'hélice pendant le fonctionnement d'une hélice (29) en vol ;
calculer, après au moins un vol de l'aéronef (100), une amplitude de vibration moyenne et un angle de phase de vibration moyen sur la base des données de vibration de l'hélice ;
récupérer des données de configuration de l'hélice à partir de la mémoire ;
récupérer, à partir de la mémoire, des données d'étalonnage d'hélice comprenant au moins un coefficient d'influence indicatif de l'impact d'au moins une masselotte d'équilibrage sur la correction d'un déséquilibre de l'hélice (29) ;
régler l'au moins un coefficient d'influence selon un élément parmi les données de configuration de l'hélice et une condition de vol de l'aéronef (100) ;
déterminer une solution d'équilibrage d'hélice comprenant l'identification, à l'aide d'au moins une équation d'équilibrage et en fonction de l'amplitude de vibration moyenne, de l'angle de phase de vibration moyen et de l'au moins un coefficient d'influence, d'une valeur pour l'au moins une masselotte et d'un endroit de placement pour l'au moins une masselotte afin de corriger le déséquilibre de l'hélice (29) ; et
générer une indication de besoin d'équilibrage en délivrant la solution d'équilibrage de l'hélice.

11. Système selon la revendication 10, dans lequel les instructions sont exécutables par l'unité de traitement (114, 402) pour calculer l'amplitude de vibration moyenne et l'angle de phase de vibration moyen pour un segment de vol sélectionné et/ou une durée de vol sélectionnée déterminée en identifiant au moins une période de temps pendant laquelle les données de vibration de l'hélice dépassent un seuil prédéterminé et pendant laquelle l'un de l'aéronef (100) et de l'hélice (29) fonctionne dans une condition de vol donnée.

12. Système selon la revendication 10 ou 11, dans lequel les instructions sont exécutables par l'unité de traitement (114, 402) pour délivrer la solution d'équilibrage d'hélice en mettant à disposition la solution d'équilibrage d'hélice sur une interface utilisateur accessible par au moins un dispositif client sur un réseau.

13. Système selon l'une quelconque des revendications 10 à 12, dans lequel les instructions sont exécutables par l'unité de traitement (114, 402) pour délivrer la solution d'équilibrage d'hélice à au moins un côté plan de dispositif.
